# EUROPEAN PATENT APPLICATION

(11) **EP 4 589 958 A1**
(43) Date of publication of application: **23.07.2025**
(21) Application number: 24750041.6
(22) Date of filing: 23.01.2024
(51) Int. Cl.: H04N 21/234, H04N 5/92, H04N 5/765, H04N 7/15

(54) **INFORMATION PROCESSING TERMINAL, IMAGE TRANSMISSION SYSTEM, AND PROGRAM**

(30) Priority: 30.01.2023 JP 2023012372
(71) Applicant: Fairy Devices Inc., Bunkyo-ku, Tokyo 113-0034 (JP); DAIKIN INDUSTRIES, LTD., Osaka-shi, Osaka 530-0001 (JP)
(72) Inventor: Fujino Masato, Tokyo 113-0034 (JP); Takezaki Yuichiro, Tokyo 113-0034 (JP); Kuchii Jun, Tokyo 113-0034 (JP); KATAOKA Taro, Osaka-shi Osaka 530-0001 (JP)
(74) Representative: Moser Götze & Partner Patentanwälte mbB
(86) International application number: PCT/JP2024/001770
(87) International publication number: WO 2024/162089

(57) **Abstract**

[Problem] To make it possible to easily acquire high-quality still image data corresponding to an arbitrary timing of moving image data.

[Solution] A information processing terminal comprises: an image sensor 15 that generates an image signal; a moving image encoder 11c that converts the image signal into moving image data via encoding for moving images; a memory 11f; and a still image encoder 11e that converts the image signal into still image data via encoding for still images, and that associates the still image data with the moving image data and saves the still image data in the memory 11f.

## Description

### TECHNICAL FIELD

The present invention relates to an information processing terminal, an image transmission system, and a program. Specifically, the present invention relates to technologies for acquiring moving image data together with high-quality still image data with an information processing terminal and transmitting the moving image data as well as the still image data as necessary to a receiving terminal.

### BACKGROUND ART

In recent years, the digital transformation (DX) of field operations has become an urgent issue to address a variety of problems such as the increasing complexity of field operations, decreasing workforce and succession of skills possessed by skilled workers. As one solution to these problems, a remote support system that connects a wearable device worn by a worker in the field and a computer operated by support personnel via the Internet or other means to share audio information and visual information has been proposed (Patent Literature 1).

In such a remote support system, the wearable device (transmitting terminal) acquires moving image data depicting the surrounding environment of the worker by means of a camera and transmits the moving image data to the computer (receiving terminal) operated by the support personnel. In this process, an image signal acquired with an image sensor of the camera is converted into moving image data in a specific format by encoding for moving images, which includes converting the format into a specific moving image format and compressing the data volume in the transmitting terminal. In recent years, even small cameras have become capable of acquiring high-resolution and high-frame-rate moving images, but in some cases, the limited bandwidth of a communication line that connects the transmitting terminal and the receiving terminal prevents the moving images acquired with the camera of the transmitting terminal from being transmitted to the receiving terminal as is. In such a case, the transmitting terminal may transmit the moving images to the receiving terminal after optimizing the quality of the moving images in accordance with the bandwidth of the communication line.

Patent Literature 2 discloses a teleconferencing system for telemedicine. In this remote system, a first terminal (transmitting terminal) acquires a high-quality video signal with a high bit rate and converts it into a low-quality video signal with a low bit rate. Then the first terminal transmits the low-quality video signal together with an audio signal to a teleconferencing server in real time while transmitting the high-quality video signal together with the audio signal to a symptom recognition server in an asynchronous manner. This enables real-time medical examinations using the first terminal operated by a patient and the teleconferencing server operated by a medical doctor as well as more accurate diagnosis with regard to signs of diseases of the patient or the like on the symptom recognition server.

### CITATION LIST

### PATENT LITERATURE

Patent Literature 1: Japanese Patent No. 7023022.
Patent Literature 2: International Publication WO2019/207392 pamphlet.

### SUMMARY OF INVENTION

### TECHNICAL PROBLEM

The remote support system aimed at the digital transformation of field operations may sometimes encounter a situation in which the support personnel focus on an image at a certain timing and wish to closely examine the image at that timing when the worker is transmitting images of a work site or other locations in real time to the computer (receiving terminal) of the support personnel using a wearable device (transmitting terminal). For example, it may be assumed that when the worker is capturing images of the detailed structure or wiring of a device at hand, or documents or manuals with the camera, the support personnel accurately grasp the contents of the structure, documents or the like and issue instructions to the worker. During this process, the wearable device encodes the image signal acquired with the image sensor for moving images to generate the moving image data, but a specific frame taken from the moving image data has a lower resolution than the original image signal because the moving image data are compressed in terms of data volume or processed in another way. Therefore, when the support personnel wish to grasp the detailed structure at the worker's hand or the contents of documents or the like, the frame at a specific timing taken from the moving image data has poor image quality, which prevents the support personnel from accurately grasping the contents.

In the system described in Patent Literature 2, as described above, the first terminal (transmitting terminal) acquires the high-quality video signal with a high bit rate and the low-quality video signal with a low bit rate. In this system, however, it is assumed that the high-quality video signal is transmitted in an asynchronous manner to the symptom recognition server, while the low-quality video signal is transmitted to the teleconferencing server in real time. Therefore, the system described in Patent Literature 2 does not perform the process of associating the timing when the high-quality video signal is acquired with the timing when the low-quality video signal is acquired. This means that, for example, when trying to view a high-quality video signal that corresponds to a video at a certain timing out of the low-quality video signal, it is difficult to identify the video at that timing in the high-quality video signal.

Therefore, the main subject of the present invention is to make it possible to easily acquire high-quality still image data corresponding to an arbitrary timing of moving image data.

### SOLUTION TO PROBLEM

The inventors of the present invention have diligently studied means to solve the problems described above and have found that, in addition to the path of a moving image encoder that converts an original image signal acquired with an image sensor into moving image data, adding a path of a still image encoder that converts the same image signal into still image data, associating the still image data with a frame of the moving image data and saving the still image data in a memory make it possible to easily acquire the still image data corresponding to an arbitrary timing of the moving image data. The inventors then came to the conclusion that, based on the findings described above, the problems in the conventional technology can be solved and completed the present invention.

Specifically, the present invention has the following configuration.

A first aspect of the present invention relates to an information processing terminal. The information processing terminal according to the present invention includes an image sensor, a moving image encoder, a memory, and a still image encoder. The image sensor generates an image signal. The moving image encoder converts the image signal into moving image data by encoding for moving images (mainly by compressing or converting formats). Encoding for moving images includes a compressing/converting process to combine a plurality of frames that are part of the moving image data into a single set of moving image data, as well as a compressing/converting process for each of the frames. In addition, in the case where an audio signal is acquired together with the image signal, encoding for moving images includes a compressing/converting process to combine the moving image data and audio data into a single file. The memory is preferably a non-volatile memory, but a volatile memory may also be used. The still image encoder converts the image signal into the still image data by encoding for still images. Encoding for still images differs from encoding for moving images in that only a compressing/converting process is performed for each of the frames. In encoding for still images, there is basically no need to associate the still image data with the audio data. The still image encoder associates the still image data with the moving image data and saves the still image data in the memory. As a specific means, for example, the still image encoder may add synchronization data for associating the still image data with the moving image data in a time-sequential manner and save the still image data in the memory. For example, in the present invention, while the moving image data and the still image data are generated from the same image signal, the same synchronization data (in essence, a time stamp) will be provided to a certain frame that is part of the moving image data and to a certain still image data. Note, however, that specific means for associating the still image data with the moving image data are not limited to this. This makes it possible, when one frame is arbitrarily designated from among many frames that are part of the moving image data, to easily identify the still image data that was acquired at the same timing as this designated frame.

Note that in the information processing terminal according to the present invention, the moving image encoder and/or the still image encoder may be a software-based implementation as parts of the functions that a processor such as a CPU and a GPU executes. The moving image encoder and/or the still image encoder may be a hardware-based implementation by a large-scale integration circuit (LSI) that is separate from the processor. In particular, either one of the moving image encoder or the still image encoder is preferably a software-based implementation, and the other is preferably a hardware-based implementation. This makes it possible for the moving image encoder and the still image encoder to be driven in parallel with separate paths, thereby efficiently converting the same image signal into the moving image data and the still image data.

The information processing terminal according to the present invention preferably includes a communication unit and a control unit. The communication unit is an element for communicating with a receiving terminal via a communication line such as the Internet. The information processing terminal (transmitting terminal) and the receiving terminal may be capable of communicating with each other by relaying a server device or other devices or may be capable of communicating directly with a peer-to-peer connection. When a still image request signal including a designation of a specific timing in the moving image data is received from the receiving terminal while transmitting the moving image data to the receiving terminal, the control unit executes processes of reading the still image data corresponding to that timing from the memory and transmitting the still image data to the receiving terminal. The present embodiment assumes, for example, that a worker in the field wears the information processing terminal (transmitting terminal) to capture a moving image and transmit the moving image data to the receiving terminal of support personnel at a remote location. In this case, when the support personnel designate an arbitrary timing of the moving image data, high-quality still image data corresponding to the designated timing can be transmitted from the information processing terminal to the receiving terminal.

For the information processing terminal according to the present invention, the communication unit may be further capable of communicating with the server device. In this case, the control unit further executes a process of uploading the still image data that are saved in the memory to the server device after the transmission of the moving image data to the receiving terminal has been completed. Note that during this process, the information processing terminal may upload the moving image data together with the still image data to the server device. Thus, by uploading the still image data to the server device with the information processing terminal, for example, even if the still image data are deleted from the memory of the information processing terminal, a terminal on the side of a recipient can acquire or show arbitrary still image data by accessing the server device.

For the information processing terminal according to the present invention, the control unit may analyze the moving image data, drive the still image encoder when an inclusion of a specific image in the moving image data is detected and control the still image encoder to convert the image signal into the still image data and save the still image data in the memory. For example, even when a two-dimensional code or a three-dimensional code (QR code (registered trademark)) is included in the moving image data, the information processing terminal (transmitting terminal) or the receiving terminal may not be able to accurately read such a code due to the poor image quality of the moving image data. In such a case, by using the inclusion of such a three-dimensional code or the like in the moving image data as a trigger to activate the still image encoder to acquire the still image data, the three-dimensional code or the like can be accurately read because the still image data have a better image quality than the moving image data.

The information processing terminal according to the present invention preferably includes one or more sensors of a gesture sensor, an acceleration sensor, a gyro sensor, a geomagnetic sensor, and a biometric sensor. In this case, the control unit of the information processing terminal may drive the still image encoder when the sensor detects a specific signal and control the still image encoder to convert the image signal into the still image data and save the still image data in the memory. Thus, when the sensor detects a specific movement of a wearer who wears the information processing terminal, such as an action of looking at the hand, an action of focusing on one point in the front for a specific period of time or longer and an action of falling down, the still image data with a higher image quality are automatically generated. This makes it possible, for example, to predict and prepare in advance the still image data that the support personnel will focus on before the support personnel at a remote location designate the timing. This increases the ease of use of the information processing terminal according to the present invention.

The information processing terminal according to the present invention is preferably a wearable device to be worn by the worker in the field. For the information processing terminal according to the present invention, the image signal is preferably a signal of an image of a field operation captured by the worker.

A second aspect of the present invention relates to an image transmission system. The image processing system according to the present invention includes the information processing device (transmitting terminal) according to the first aspect described above and the receiving terminal that is capable of receiving the moving image data and the still image data from the information processing device.

A third aspect of the present invention relates to a program for causing a portable information terminal to function as the information processing terminal according to the first aspect described above. The program may be downloadable through the Internet or other means or may be pre-installed in the portable information terminal. The program may also be recorded on a recording medium such as a CD-ROM.

### ADVANTAGEOUS EFFECTS OF INVENTION

The present invention makes it possible to easily acquire still image data corresponding to an arbitrary timing of moving image data.

### BRIEF DESCRIPTION OF DRAWINGS

FIG. 1 illustrates an overall view of a system according to one embodiment of the present invention.
FIG. 2 illustrates an overview of the process of generating moving image data and still image data in a transmitting terminal.
FIG. 3 illustrates a neck-mounted wearable device as an example of the transmitting terminal.
FIG. 4 is a block diagram illustrating the function structure of the system according to the present invention.
FIG. 5 is a block diagram illustrating more specific elements with respect to the functions of image processing in a control unit of the transmitting terminal.
FIG. 6 illustrates an overview of the process of transmitting the moving image data and the still image data from the transmitting terminal to a receiving terminal, along with the correspondence between the moving image data and the still image data.
FIG. 7 illustrates an example of a processing flow of transmitting the moving image data and the still image data from the transmitting terminal to the receiving terminal, showing the case in which the still image data are saved at regular intervals during the transmission of the moving image data.
FIG. 8 illustrates an example of a processing flow of transmitting the moving image data and the still image data from the transmitting terminal to the receiving terminal, showing the case in which the still image data are saved when a specific trigger is detected during the transmission of the moving image data.

### DESCRIPTION OF EMBODIMENTS

The following is a description of an embodiment of the present invention with reference to the drawings. The present invention is not limited to the embodiment described below but includes those that are modified as appropriate from the embodiment described below to the extent that it is obvious to a person skilled in the art.

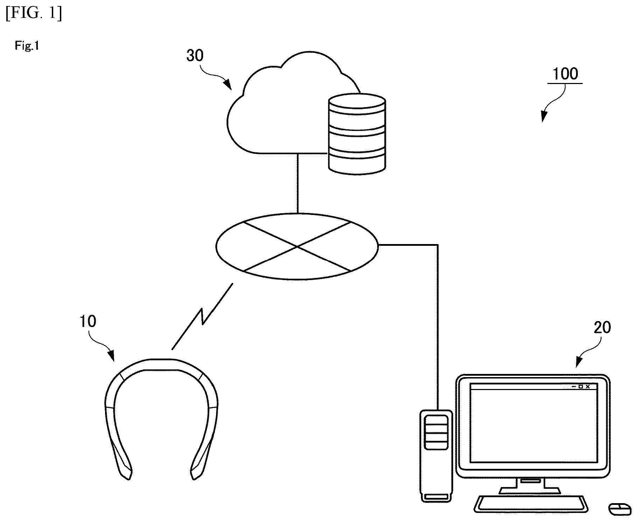

FIG. 1 schematically illustrates the overall configuration of a system 100 according to one embodiment of the present invention. The system 100 according to the present embodiment is preferably used in an application in which support personnel remotely support a worker conducting field operations via the Internet and other applications. In the system 100, the worker captures a moving image and a still image with a transmitting terminal 10 and transmits these data to a receiving terminal 20 operated by the support personnel via the Internet. The support personnel at a remote location can also view the moving image and the still image transmitted from the transmitting terminal 10 of the worker via the receiving terminal 20 as well as communicate via voice with the transmitting terminal 10. The system 100 may also include an external cloud server 30 that provides a video conversation tool to the transmitting terminal 10 and the receiving terminal 20. In this case, moving image data and still image data are transmitted from the transmitting terminal 10 to the receiving terminal 20 via the cloud server 30.

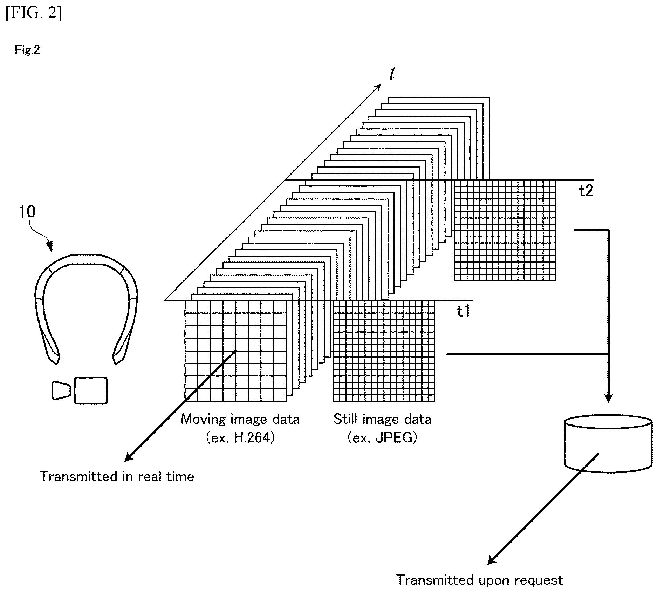

FIG. 2 schematically illustrates the process of transmitting images with the transmitting terminal 10 (information processing terminal), which is part of the system 100 according to the present invention. The transmitting terminal 10 is provided with a digital camera and converts an image signal acquired with an image sensor of the camera into the moving image data composed of a plurality of frames that are sequential over time. The transmitting terminal 10 is also provided with a microphone, and an audio signal acquired with the microphone is also associated with the moving image data. Such moving image data including audio is transmitted in real time to the receiving terminal 20 via, for example, the cloud server 30. Such transmission of the moving image data is already publicly known with a video conferencing system and other systems.

The transmitting terminal 10 according to the present invention further converts the image signal acquired with the image sensor of the camera into the still image data composed of a single frame. During this process, the moving image data and the still image data are based on the image signal acquired with the same image sensor. Thus, a certain frame that is part of the moving image data (hereinafter referred to as a "moving image frame") and a frame that is part of the still image data (hereinafter referred to as a "still image frame") can be synchronized in terms of timing. In addition, unlike the moving image data, the still image data do not need to combine frames or include an accompanying audio signal, thus the data volume can be larger and the resolution (density) of each of the frames can be higher for the still image frame than for the moving image frame. Since the still image data are generated from an original image signal separately from the moving image frame, rather than a frame extracted from the moving image data, they may also include information that was discarded when the image signal was converted into the moving image data. Thus, the still image frame can be described as a clearer image of a subject.

The still image data obtained in this way are provided with the same synchronization data (codes t1, t2...) as the moving image frames whose timing corresponds to the timing at which the image signal was acquired among a number of frames that are part of the moving image data and are saved in the memory in the transmitting terminal 10. Here, for example, assume that the receiving terminal 20, which is currently displaying the moving image transmitted from the transmitting terminal 10, sends a request for the transmission of a clearer image with the designation of a transmission frame at a certain timing (for example, t1). In this case, the transmitting terminal 10 reads the still image data corresponding to the timing designated by the receiving terminal 20 (for example, t1) from the memory and transmits the still image data to the receiving terminal 20. Thus, generating high-quality still image data separately from the moving image data and saving the still image data at least temporarily in the memory makes it possible to transmit the high-quality still image data in response to the request from the receiving terminal 20.

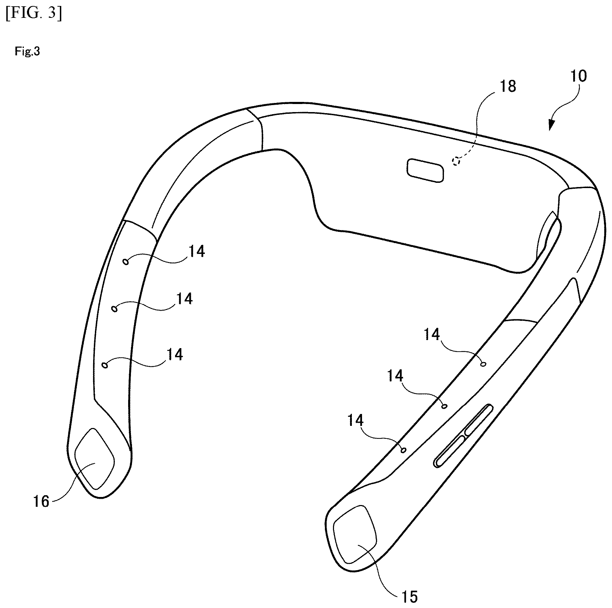

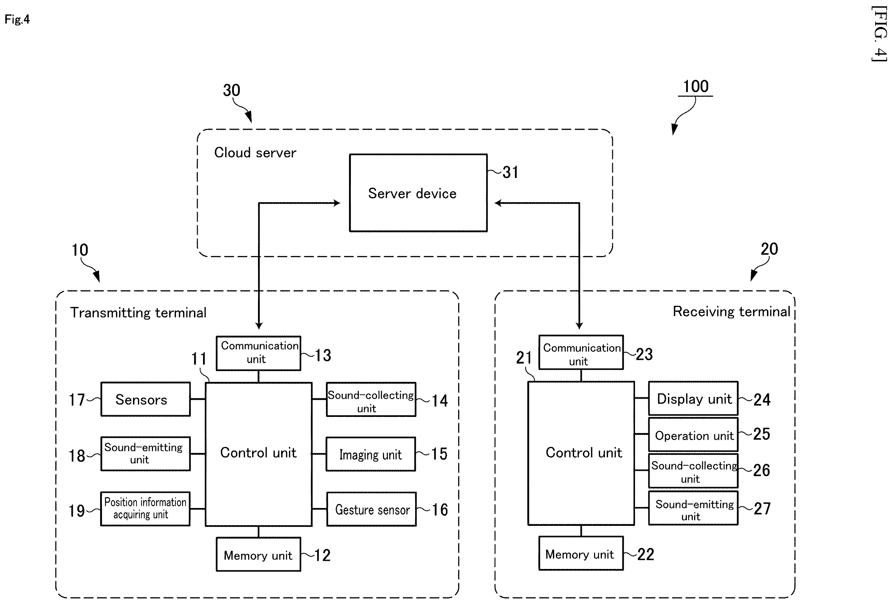

Next, the configuration of the system 100 according to one embodiment of the present invention is described more specifically. FIG. 3 is an external perspective view of an example of the transmitting terminal 10. FIG. 4 illustrates an example of hardware elements of the transmitting terminal 10. As shown in FIG. 3, the transmitting terminal 10 according to the present embodiment is a neck-mounted wearable device. The transmitting terminal 10 is provided with a left arm section, a right arm section and a main body section that is connected to the left arm section and the right arm section at the back of the neck of the wearer. When wearing the transmitting terminal 10, the entire device may be hooked around the neck with the main body section in contact with the back of the neck of the wearer and the left arm section and the right arm section hanging down from the sides of the neck of the wearer toward the chest side of the wearer. The housing of the transmitting terminal 10 houses a variety of electronic components.

The left arm section and the right arm section are each provided with a plurality of sound-collecting units 14 (microphones). The sound-collecting units 14 are arranged mainly for the purpose of acquiring the sounds in the surrounding environment of the wearer and the voices of the wearer and the person who talks to the wearer. It is preferable to employ an omni-directional (non-directional) microphone as the sound-collecting unit 14 so that the sounds generated in the surrounding environment of the wearer can be collected over a wide area. As the sound-collecting unit 14, any publicly known microphone such as a dynamic microphone, a condenser microphone and a micro-electrical-mechanical systems (MEMS) microphone may be employed. The sound-collecting unit 14 converts sound into an electrical signal, which is amplified by an amplifier circuit and then converted into digital information by an A/D conversion circuit to be output to the control unit 11. A sound signal acquired with the sound-collecting unit 14 is transmitted to the control unit 11 provided inside the housing. In the present embodiment, the sound signal acquired with the sound-collecting unit 14 can be transmitted to the receiving terminal 20 via the Internet through the communication unit 13. This allows the sound acquired with the transmitting terminal 10 by the worker in the field to be shared with the receiving terminal 20 of the support personnel at the remote location.

The left arm section is further provided with an imaging unit 15 that includes the image sensor. Specifically, the imaging unit 15 is provided on the end face of the left arm section to capture an image of the front side of the wearer. The image sensor forms an image of light originating from an object (including reflected light) on a light-receiving surface of the image sensor through an optical system and photoelectrically converts the brightness or darkness of the light of the image into an amount of electric charge to obtain the image signal. The image signal acquired with the image sensor of the imaging unit 15 is transmitted to the control unit 11 in the housing and converted into the moving image data and/or the still image data by encoding for moving images and/or encoding for still images. A common digital camera may be used as the imaging unit 15. The imaging unit 15 includes, for example, a photographing lens, a mechanical shutter, a shutter driver, a photoelectric conversion device such as a CCD image sensor unit, a digital signal processor (DSP) that reads the amount of electric charge from the photoelectric conversion device to generate image data, and an IC memory. The image data acquired with the imaging unit 15 are supplied to the control unit 11 and saved in a memory unit 12. The image data may also be subjected to a specific image analysis process. The moving image and the still image acquired with the imaging unit 15 are transmitted to the receiving terminal 20 via the Internet through the communication unit 13, as described above. This allows the moving image or the still image acquired with the transmitting terminal 10 by the worker in the field to be shared with the receiving terminal 20 of the support personnel at the remote location.

The right arm section is further provided with a non-contact type gesture sensor 16. The gesture sensor 16 is arranged on the end face of the right arm section mainly for the purpose of detecting the movement of the hand of the wearer on the front side of the transmitting terminal 10. The gesture sensor 16 detects, for example, the movement or shape of the fingers of the wearer. An example of the gesture sensor 16 is an optical sensor, which detects the movement or shape of the object by emitting light from an infrared-emitting LED toward the object and capturing changes in the reflected light with a light-receiving device. The detection information from the gesture sensor 16 is transmitted to the control unit 11 and is mainly used to control the imaging unit 15 and a sound-emitting unit 18. Specifically, the detection information from the gesture sensor 16 is used to control the activation, deactivation or the like of the imaging unit 15 and the sound-emitting unit 18. For example, the gesture sensor 16 may control the imaging unit 15 upon detecting the object, such as the hand of the wearer, approaching the gesture sensor 16 or may control the imaging unit 15 upon detecting that the wearer performs a specific gesture within the detection area of the gesture sensor 16. Note that the positions of the imaging unit 15 and the gesture sensor 16 may be exchanged. The gesture sensor 16 may also be replaced by a proximity sensor. The proximity sensor detects, for example, the fingers of the wearer approaching a specific area. A publicly known sensor such as an optical sensor, an ultrasonic sensor, a magnetic sensor, a capacitive sensor and a temperature sensor may be employed as the proximity sensor.

The sound-emitting unit (speaker) 18 is provided on the outside (opposite side of the wearer) of the main body section that is positioned on the back of the neck of the wearer. In the present embodiment, the sound-emitting unit 18 is arranged to output sound toward the outside of the main body section. Thus, emitting sound directly backward from the back of the neck of the wearer makes it difficult for the sound output from the sound-emitting unit 18 to directly reach the person who talks to the wearer in front of the front of the wearer. This makes it easier for the person who talks to the wearer to distinguish between the voice produced by the wearer himself/herself and the sound emitted from the sound-emitting unit 18 of the transmitting terminal 10. The sound-emitting unit 18 is an acoustic device that converts an electrical signal into physical vibration (in other words, sound). An example of the sound-emitting unit 18 is a common speaker that transmits sound to the wearer by air vibration. The sound-emitting unit 18 may be a bone-conduction speaker that transmits sound to the wearer by vibrating the bones of the wearer. Note that in this case, the sound-emitting unit 18 may be provided inside the main body section (on the side of the wearer) so that the bone-conduction speaker is in contact with the bones on the back of the neck (cervical spine) of the wearer. In the present embodiment, the audio signal input to the receiving terminal 20 is transmitted to the transmitting terminal 10 via the Internet. The transmitting terminal 10 converts the audio signal that is received from the receiving terminal 20 into sound with the sound-emitting unit 18 to output it. This makes it possible for the voice of the support personnel who operate the receiving terminal 20 to be delivered to the worker who wears the transmitting terminal 10.

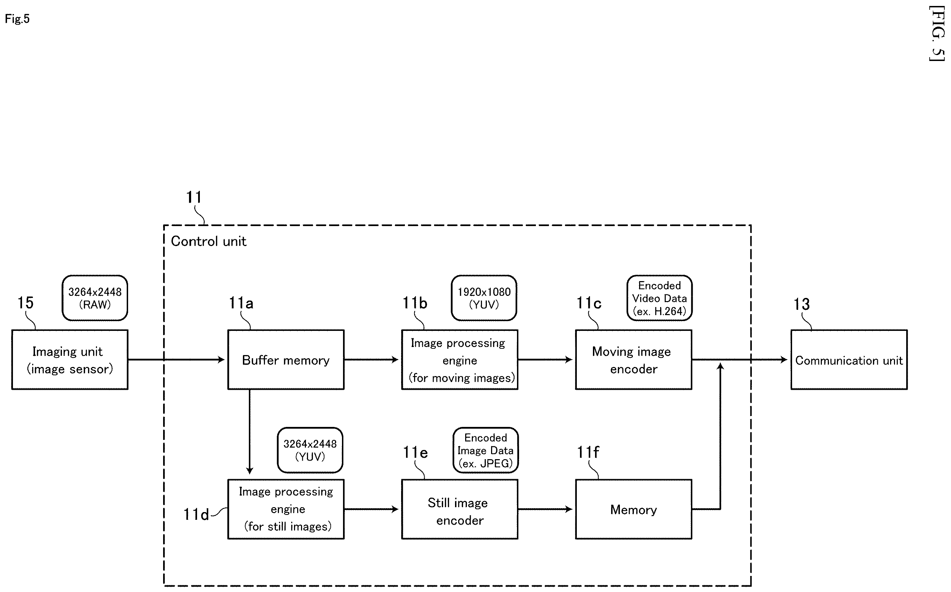

As shown in FIG. 4, the control unit 11 of the transmitting terminal 10 performs arithmetic operations to control the other elements provided for the transmitting terminal 10. A processor such as a central processing unit (CPU) and a graphics processing unit (GPU) may be used as the control unit 11. The processor that is part of the control unit 11 basically reads a program that is saved in the memory unit 12, loads the program into a main memory and executes a specific arithmetic operation in accordance with the program. The control unit 11 can also write or read the result of the arithmetic operation in accordance with the program into or from the memory unit 12 as appropriate. The control unit 11 may also include a large-scale integration circuit (LSI) for image processing. Details of the control unit 11 of the transmitting terminal 10 are described below with reference to FIG. 5.

The memory unit 12 of the transmitting terminal 10 is an element for saving information used for the arithmetic operation and other processes executed by the control unit 11 or the result of such an arithmetic operation. The storage function of the memory unit 12 may be realized, for example, by a non-volatile memory such as an HDD and an SDD. The memory unit 12 may also have a function as the main memory for writing or reading the intermediate process of the arithmetic operation executed by the control unit 11. The memory function of the memory unit 12 may be realized by a volatile memory such as a RAM and a DRAM. ID information unique to the user who owns it may also be saved in the memory unit 12. An IP address, which is an identification of the transmitting terminal 10 to the network, may also be saved in the memory unit 12.

The communication unit 13 of the transmitting terminal 10 is an element for wirelessly communicating with the receiving terminal 20 or the cloud server 30. To communicate with the receiving terminal 20 or the cloud server 30 via the Internet, for example, a communication module for wirelessly communicating with a publicly known mobile communication standard such as 3G (W-CDMA), 4G (LTE/LTE-Advanced) and 5G, or a wireless LAN system such as Wi-Fi (registered trademark) may be employed as the communication unit 13. The transmitting terminal 10 may also wirelessly communicate directly with the receiving terminal 20 without involving the cloud server 30. In this case, the communication unit 13 preferably employs a communication module for close proximity wireless communication such as Bluetooth (registered trademark) and NFC to communicate directly with the receiving terminal 20.

Sensors 17 of the transmitting terminal 10 include, for example, a sensor device for detecting the activity of operation and use of the transmitting terminal 10 or biometric information of the wearer. A sensor module that is installed in a common portable information terminal or a wearable device may be employed for the sensors 17. For example, the sensors 17 include a gyro sensor, an acceleration sensor, a geomagnetic sensor, and a battery sensor. The sensors 17 may also include a biometric sensor for detecting the biometric information of the wearer, such as a body temperature sensor, a heart rate sensor, a blood oxygen level sensor, a blood pressure sensor, and an electrocardiogram sensor.

A position information acquiring unit 19 of the transmitting terminal 10 is an element for acquiring the current position information of the transmitting terminal 10. Specifically, the position information acquiring unit 19 has a function of positioning using the Global Positioning System (GPS). The position information acquiring unit 19 measures the time required to receive each radio wave based on the radio wave transmission time information included in the radio wave sent from a plurality of GPS satellites and transmits the time information indicating the time to the control unit 11. The control unit 11 can calculate information on the latitude and longitude of the location of the transmitting terminal 10 based on the acquired time information. The position information acquiring unit 19 may also acquire the current position information by scanning radio waves or beacon signals originating from a wireless base station such as a Wi-Fi (registered trademark) access point.

Note that, as is clear from FIG. 3 and FIG. 4, in the present embodiment, the transmitting terminal 10 does not have a display device such as a display and a monitor. Therefore, although the worker can perform relatively simple operations such as turning each hardware element on and off using the gesture sensor 16 or other devices, it is difficult to perform complex operations such as operating application programs. In the case of using a transmitting terminal 10 that does not have such a display device, it is particularly effective to remotely control the transmitting terminal 10 via the Internet by means of the receiving terminal 20 or other devices, as in the system according to the present invention.

FIG. 4 further illustrates an example of the hardware elements of the receiving terminal 20. The receiving terminal 20 may be realized by a common personal computer (PC). The receiving terminal 20 may be either a desktop PC or a laptop PC. The receiving terminal 20 may be a smartphone, a tablet-type terminal or other device. The receiving terminal 20 has a control unit 21, a memory unit 22, a communication unit 23, a display unit 24, an operation unit 25, a sound-collecting unit 26 and a sound-emitting unit 27. A common PC and peripheral devices used with it may be employed as these elements.

The control unit 21 of the receiving terminal 20 is composed of the processor such as a CPU and a GPU. The control unit 21 basically reads the program that is saved in the memory unit 22, loads the program into a main memory and executes a specific arithmetic operation in accordance with the program. The control unit 11 can also write or read the result of the arithmetic operation in accordance with the program into or from the memory unit 12 as appropriate. In this way, the control unit 21 performs the controlling process of each of the elements 22 through 27 in accordance with the program saved in the memory unit 22.

The memory unit 22 of the receiving terminal 20 is an element for saving information used for the arithmetic operation and other processes executed by the control unit 21 or the result of such an arithmetic operation. The storage function of the memory unit 22 may be realized, for example, by a non-volatile memory such as an HDD and an SDD. The memory unit 22 may also have a function as the main memory for writing or reading the intermediate process of the arithmetic operation executed by the control unit 11. The memory function of the memory unit 22 may be realized by a volatile memory such as a RAM and a DRAM.

The communication unit 23 of the receiving terminal 20 is an element for communicating with the transmitting terminal 10 or the cloud server 30. The type of communication method for the communication unit 23 may be either wired or wireless. For example, the receiving terminal 20 may be able to be connected to the Internet via an optical line or a telephone line in a wired manner or may be able to be connected to the Internet via a wireless LAN system such as Wi-Fi (registered trademark). As described above, the receiving terminal 20 may also wirelessly communicate directly with the transmitting terminal 10 without involving the cloud server 30.

The display unit 24 of the receiving terminal 20 is an element for displaying an image. In the system according to the present invention, the moving image and/or the still image that is received from the transmitting terminal 10 is mainly displayed on the display unit 24. A publicly known display such as a liquid crystal display or an organic EL display may be used as the display unit 24. The display unit 24 may also be a projector that projects video light onto a screen.

The operation unit 25 of the receiving terminal 20 is an element for the user (support personnel) to input specific operation information to the receiving terminal 20 (in particular, the control unit 21). A publicly known device such as a touch panel, a mouse, a keyboard, a trackpad, a stylus pen and a pen tablet may be used as the operation unit 25. A touch panel display may also be configured by overlaying a touch panel on a display screen.

The sound-collecting unit 26 of the receiving terminal 20 is an element mainly for acquiring the voice of the user (support personnel). A directional or omni-directional (non-directional) microphone may be employed as the sound-collecting unit 26. A dynamic microphone, a condenser microphone, a MEMS microphone, or other publicly known microphone may be employed as the microphone. In the present embodiment, the audio signal acquired with the sound-collecting unit 26 of the receiving terminal 20 can be transmitted to the transmitting terminal 10 via the Internet through the communication unit 23. This makes it possible for the voice of the support personnel to be output from the transmitting terminal 10 of the worker who works in the field.

The sound-emitting unit 27 of the receiving terminal 20 is an element mainly for outputting the voice received from the transmitting terminal 10. A common speaker, an earphone or headphones that transmit sound by air vibration may be employed as the sound-emitting unit 27. In the present embodiment, the sound signal input to the transmitting terminal 10 is transmitted to the receiving terminal 20 via the Internet. The receiving terminal 20 converts the sound signal that is received from the transmitting terminal 10 into sound with the sound-emitting unit 27 to output it. This makes it possible for the sound that is acquired by the transmitting terminal 10 to be delivered to the support personnel who operate the receiving terminal 20.

The cloud server 30 provides, for example, a video conversation tool such as a web conferencing tool to the transmitting terminal 10 and the receiving terminal 20. The cloud server 30 is composed of one or more server devices 31. For example, when establishing a communication connection between the transmitting terminal 10 and the receiving terminal 20, the cloud server 30 sends a request to each of the users of the transmitting terminal 10 and the receiving terminal 20 (the worker and the support personnel) to log in to their accounts for the video conversation tool. A dedicated application program for the video conversation tool is installed on each of the transmitting terminal 10 and the receiving terminal 20. The transmitting terminal 10 and the receiving terminal 20 each execute the program to access the cloud server 30 and log in to their accounts. When the transmitting terminal 10 and the receiving terminal 20 successfully complete the login authentication, the cloud server 30 starts relaying the transmission and reception of image data and sound data between the transmitting terminal 10 and the receiving terminal 20. A commonly available commercial tool may be used as appropriate as the video conversation tool.

Next, the encoding process of the moving image data and the still image data with the transmitting terminal 10 is specifically described with reference to FIG. 5. As shown in FIG. 5, the image signal that is acquired with the image sensor of the imaging unit 15 is input to the control unit 11. The image signal, which is also called a RAW image, is in principle unprocessed sensor data obtained from the image sensor and is data with the highest information content before performing encoding for moving images or still images. In the RAW image, the values acquired with each of the red, green, and blue sensors are recorded as they are, and the color of a pixel is expressed as RGB values. Note that in the example shown in FIG. 5, the RAW image has a maximum image size of 3264 x 2448.

The image signal (RAW image), when input to the control unit 11, is basically input to a pipeline for moving images. The pipeline for moving images includes a buffer memory 11a, an image processing engine for moving images 11b and a moving image encoder 11c.

Since the pipeline for moving images requires continuous image processing, the RAW image is first temporarily saved in the buffer memory 11a. The buffer memory 11a can hold several frames of the RAW image from the image sensor. Note that the buffer memory 11a is a plurality of memory areas that are reserved as fixed areas on the main memory, and information on which buffer area the RAW image from the image sensor is written to is also held. For example, the buffer memory 11a has a circular ring buffer format in which an end memory area and a head memory area are logically linked so that a certain amount of data can always be accumulated by overwriting the oldest data with the newest data.

The image processing engine for moving images 11b performs the process of compressing the size of the RAW image read from the buffer memory 11a to a size that can be received by the moving image encoder 11c at a later unit and converting the color format. For example, the image processing engine 11b compresses the image size of the RAW image from 3264 x 2448 to 1920 x 1080. Although the colors in the RAW image are originally expressed as RGB values, the image processing engine 11b converts them into YUV values. YUV expresses the color of a pixel as luminance (Y), the difference between luminance and blue (U) and the difference between luminance and red (V), and requires smaller amounts of data than RGB.

The moving image encoder 11c encodes the image data whose size has been compressed and color format converted by the image processing engine for moving images 11b into a format for moving images. Specifically, the moving image encoder 11c performs the compressing/converting process to combine the plurality of frames into a single set of moving image data, as well as the compressing/converting process for each of the frames. In the case where the audio signal is acquired together with the image signal, the compressing/converting process to combine the moving image data and the audio data into a single file is also performed. The moving image encoder 11c changes the compression ratio depending on the data transmission rate (communication bandwidth) between the transmitting terminal 10 and the receiving terminal 20. Specifically, when the data transmission rate is low, the compression ratio of the image may be increased. This makes it possible to obtain the moving image data in which the plurality of frames are combined over time. Note that encoding of the moving image data may be performed in accordance with publicly known video compression standards. In the example shown in FIG. 5, H.264 (MPEG-4 AVC) is employed as the video compression standard, but the method of encoding is not limited to this.

The moving image encoder 11c also adds a time stamp (synchronization data) to the frame that is part of the moving image data. The time stamp is used to synchronize the still image data with the moving image data, as described below. The moving image encoder 11c may add a unique time stamp to all frames. Alternatively, the moving image encoder 11c may add a unique time stamp only to the frame corresponding to the still image data when generating the still image data, as described below.

The moving image data created by the pipeline for moving images 11a through 11c are transmitted in real time with the communication unit 13 of the transmitting terminal 10 to the receiving terminal 20 and/or the cloud server 30 via the Internet. On the receiving terminal 20, the moving image data received from the transmitting terminal 10 can be viewed in real time. The cloud server 30 may also save (back up) the moving image data received from the transmitting terminal 10 to a cloud storage.

The transmitting terminal 10 according to the present invention includes a pipeline for still images in addition to the pipeline for moving images as described above. As shown in FIG. 5, the pipeline for still images includes an image processing engine for still images 11d, a still image encoder 11e and a memory 11f. Note that the buffer memory 11a can be interpreted as being used for both the pipeline for moving images and the pipeline for still images. The pipeline for still images is for converting the image signal from the image sensor into the still image data in parallel with the pipeline for moving images. Therefore, by providing the pipeline for still images, the still image data can be generated in parallel with the process of generating the moving image data with the pipeline for moving images, as described above.

The image processing engine for still images 11d reads the RAW image that is saved in the buffer memory 11a and mainly performs the process of converting the color format. As described above, a specific number of frames of an original RAW image acquired with the image sensor are temporarily held in the buffer memory 11a. The processor such as a CPU that is part of the control unit 11, upon receiving an output instruction of a specific still image, reads the RAW image from the memory area one before the memory area of the buffer memory 11a where the image is currently being written and passes it to the image processing engine for still images 11d. Note that the output instruction of the specific still image may be generated at regular intervals or when a specific trigger condition (described below) is met. In other words, the still image data may be generated at regular intervals or at an arbitrary timing. In the example shown in FIG. 5, the image processing engine 11d only performs color format conversion (from RBG to YUV) of the RAW image and does not compress the image size. This makes it possible to obtain the highest quality still image data. Note, however, that the image processing engine for still images 11d may perform the compressing process of the image size in addition to the converting process of the color format, in which case it is preferable to maintain the image size of the still image data at least larger than that of each of the frames of the moving image data.

The still image encoder 11e encodes the image data whose color format has mainly been converted by the image processing engine for still images 11d into a format for still images. In encoding for still images, since there is no need to combine the plurality of frames over time, the encoding process is performed only within each of the frames. Specifically, the still image encoder 11e may encode the image based on publicly known image compression standards for still images such as JPEG. PNG, GIF, or other methods of image compression may also be employed. In this way, the still image data are obtained. Note that the still image data are generated at regular intervals or at an arbitrary timing by the still image encoder 11e, but not all of them are transmitted to the receiving terminal 20 or other devices via the Internet. Thus, since the still image data are not intended to be transmitted to the receiving terminal 20, there is no need to change the compression ratio depending on the data transmission rate (communication bandwidth) between the transmitting terminal 10 and the receiving terminal 20. Therefore, it is preferable to compress the still image data with a fixed compression ratio that is not influenced by the data transmission rate. This makes it possible to always maintain the still image data in high image quality.

The still image data generated by the still image encoder 11e are at least temporarily saved in the memory 11f. The memory 11f may utilize part of the memory area of the main memory, or a volatile or non-volatile memory may be provided separately from the main memory. The amount and time to save the still image data in the memory 11f may be adjusted as appropriate. For example, based on a specific limit set for the volume to save the still image data in the memory 11f, when the volume exceeds the limit, the oldest still image data may be deleted to save new still image data. Alternatively, the still image data may be saved in the memory 11f only while the transmitting terminal 10 is transmitting the moving image data to the receiving terminal 20, and the still image data in the memory 11f may be deleted when the transmission of the moving image data is stopped.

The still image encoder 11e also adds the time stamp (synchronization data) to each of the still image data when saving the still image data in the memory 11f. Specifically, in the present embodiment, a frame of the moving image data and a frame of the still image data each can be generated from a single RAW image acquired with the image sensor. Thus, the same time stamp is provided to each of the frames of the moving image data and the still image data generated from the same RAW image. This makes it possible to synchronize the moving image data that are being transmitted in real time with the still image data that are temporarily saved in the memory 11f by means of the time stamp.

In the example shown in FIG. 5, the image processing engine for moving images 11b and the moving image encoder 11c are preferably a hardware-based implementation by an large-scale integration circuit (LSI) that is separate from the processor such as a CPU. Meanwhile, the image processing engine for still images 11d and the still image encoder 11e are preferably functions that are realized by executing the program with the processor such as a CPU and are preferably a software-based implementation. Since the image processing of the moving image data is frequently performed in real time as described above, the hardware-based implementation can increase the processing speed and reduce power consumption. Since the image processing of the still image data is less frequent than that of the moving image data, a software-based implementation will work well. Note, however, that since the still image data have high image quality and large data volume as described above, the processor load becomes large when the frequency of generating the still image data is high. In this case, the image processing engine for still images 11d and the still image encoder 11e may be a hardware-based implementation. Conversely in this case, the image processing engine for moving images 11b and the moving image encoder 11c may be a software-based implementation.

The still image data saved in the memory 11f are basically transmitted from the transmitting terminal 10 to the receiving terminal 20 in accordance with the request from the receiving terminal 20. An example of the process of transmitting such still image data from the transmitting terminal 10 to the receiving terminal 20 is described in detail below.

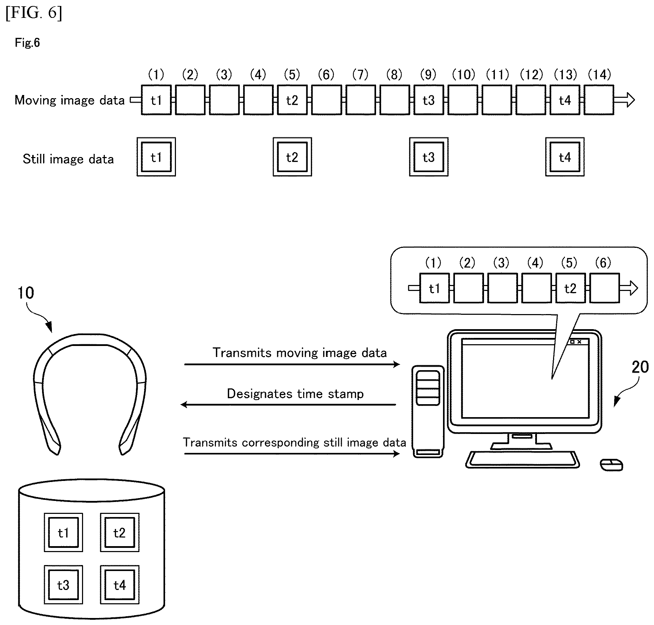

FIG. 6 illustrates an overview of the information exchanged between the transmitting terminal 10 and the receiving terminal 20, and as shown in FIG. 6, the transmitting terminal 10 generates the moving image data including the plurality of frames and the still image data composed of a single frame by the image processing described above. In this example, the still image data are generated at regular intervals, and the same time stamp as the still image data is provided to the frame of the moving image data generated at the same timing as the still image data. In the illustrated example, the time stamps t1, t2, t3 and t4 are provided to the first, fifth, ninth and 13th frames of the moving image data and the same time stamps are also provided to the still image data corresponding to each of the frames. The moving image data are transmitted in real time from the transmitting terminal 10 to the receiving terminal 20, while the still image data are first saved in the memory of the transmitting terminal 10.

Here, upon receiving the moving image data transmitted by the transmitting terminal 10, the receiving terminal 20 displays the moving image on the display unit such as a liquid crystal display. The moving image remains to be displayed on the display unit of the receiving terminal 20 as long as the transmitting terminal 10 keeps transmitting the moving image data. Here, assume that the support personnel who operate the receiving terminal 20 wish to view a clearer image of a moving image frame displayed at a certain timing while watching the moving image. In such a case, the support personnel operate the control unit such as a mouse and a touch panel to designate the timing for the request of a clear image by pausing the playback of the moving image or by clicking on a specific UI icon. This designates the moving image frame from among the moving image data for which the support personnel want a clearer image. Then, the receiving terminal 20 identifies the moving image frame that is the closest to the moving image frame designated by the support personnel among the moving image frames in the moving image data that have been provided with the time stamps. For example, with the example shown in FIG. 6, assume that the support personnel designate the fourth frame among the moving image frames that are part of the moving image data. In this case, among the moving image frames that have been provided with the time stamps, the one that is the closest to the fourth moving image frame is the fifth moving image frame, to which the time stamp of "t2" has been provided. The receiving terminal 20 transmits information indicating that the time stamp of "t2" has been designated to the transmitting terminal 10. Then, the transmitting terminal 10 reads the still image data that has been provided with the time stamp of "t2" from the memory, adds the still image data to the moving image data, and transmits the data to the receiving terminal 20. Upon receiving the still image data from the transmitting terminal 10, the receiving terminal 20 displays the still image data received here on the display unit, either together with the moving image data or in lieu of the moving image data. This makes it possible for the support personnel to obtain higher quality still image data from the transmitting terminal 10 and view them while watching the moving image.

Note that in the example described above, the moving image frame that is the closest to the moving image frame designated by the support personnel among the moving image frames in the moving image data that have been provided with the time stamps is identified. Note, however, that it is also alternatively possible to identify the moving image frame that is immediately before or immediately after the moving image frame designated by the support personnel among the moving image frames in the moving image data that have been provided with the time stamps. For example, with the example shown in FIG. 6, assume that the support personnel designate the fourth frame among the moving image frames that are part of the moving image data. In this case, among the moving image frames that have been provided with the time stamps, the one that is immediately before the fourth moving image frame is the first moving image frame, to which the time stamp of "t1" has been provided. The receiving terminal 20 may transmit information indicating that the time stamp of "t1" has been designated to the transmitting terminal 10.

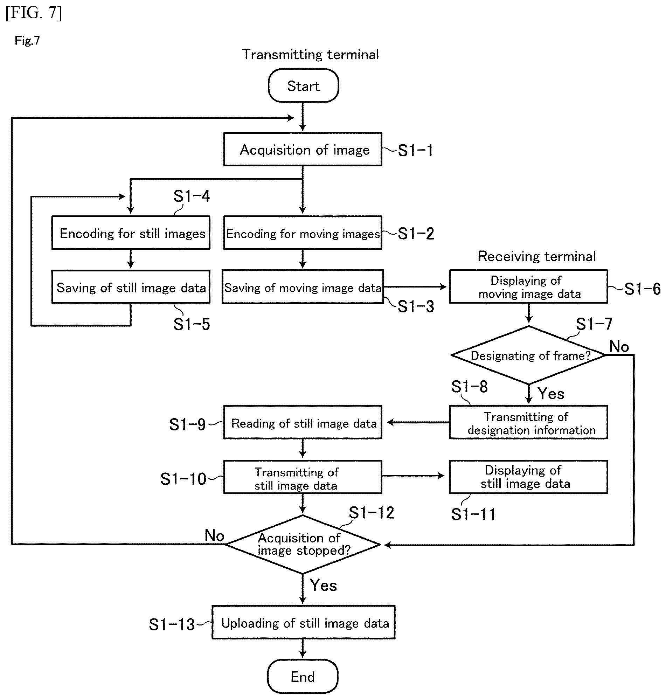

FIG. 7 illustrates a specific example of the flow of information processing performed by the transmitting terminal 10 and the receiving terminal 20 described above. FIG. 7 illustrates an example of a case in which the still image data are mainly generated at regular intervals on the transmitting terminal 10. As shown in FIG. 7, this flow starts with the transmitting terminal 10 acquiring the RAW image by means of the image sensor of the imaging unit 15 (step S1-1). When the image sensor acquires the RAW image, the image processing engine for moving images 11b and the moving image encoder 11c perform encoding for moving images to obtain the moving image data as described with reference to FIG. 5 (step S1-3). The moving image data are transmitted in real time from the transmitting terminal 10 to the receiving terminal 20 (step S1-3).

During the transmission of the moving image data, the transmitting terminal 10 performs encoding for still images with the image processing engine for still images 11d and the still image encoder 11e to obtain the still image data (step S1-4) as described with reference to FIG. 5. The obtained still image data are provided with the time stamp to synchronize with the frame of the moving image data and are temporarily saved in the memory 11f (step S1-5). In the embodiment shown in FIG. 7, the still image encoding is performed at regular intervals and the still image data with the time stamps are accumulated in the memory 11f.

Meanwhile, upon receiving the moving image data from the transmitting terminal 10, the receiving terminal 20 displays them on the display or the like (step S1-6). This display of the moving image by the receiving terminal 20 continues until the acquisition of the image by the transmitting terminal 10 is stopped. Here, assume that the user (support personnel) who operates the receiving terminal 20 designates an arbitrary frame among the moving image being displayed (step S1-7). For example, the frame is designated by pausing the moving image or by the action of clicking the specific UI icon while the moving image is being displayed. The receiving terminal 20 identifies, for example, the frame that is the closest to the frame designated by the user among the moving images that have been provided with the time stamp and transmits the time stamp of the identified frame to the transmitting terminal 10 as designation information (step S1-8).

Upon receiving the designation information from the receiving terminal 20, the transmitting terminal 10 reads the still image data that have been provided with the same time stamp from the memory (step S1-9). Then, the transmitting terminal 10 sends the still image data read here back to the receiving terminal 20 (step S1-10). Upon receiving the still image data from the transmitting terminal 10, the receiving terminal 20 displays them on the display (step S1-11). The receiving terminal 20 may, for example, display the still image data instead of the moving image data or may display the moving image data in one window while displaying the still image data in another window. The receiving terminal 20 can also save the still image data to a storage or other device. Note that the receiving terminal 20 may simply save the still image data to the storage or other device without displaying them on the display. The receiving terminal 20 may request the still image data repeatedly while the moving image data are being transmitted from the transmitting terminal 10.

The process of transmitting the moving image data in real time described above and the process of transmitting the still image data sequentially when requested are performed until the transmitting terminal 10 stops the acquisition of the image. Upon stopping the acquisition of the image, in other words, when the image sensor is turned off, the transmitting terminal 10 uploads the still image data saved in the memory to the cloud server 30 (steps S1-12 and S1-13). This ensures that even when the transmitting terminal 10 deletes the still image data from the memory, the still image data are still saved in the cloud server 30 for a certain period of time. Thus, the receiving terminal 20 can also download the still image data from the cloud server 30 instead of the transmitting terminal 10.

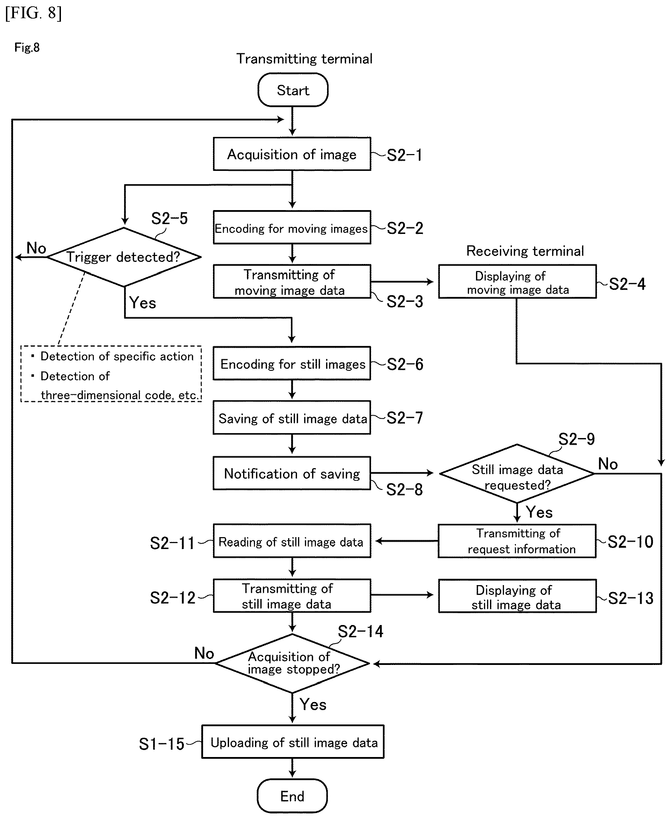

FIG. 8 illustrates another specific example of the flow of information processing performed by the transmitting terminal 10 and the receiving terminal 20. In the example shown in FIG. 8, the process starting with the step of the transmitting terminal 10 acquiring the image, encoding the image, transmitting the moving image data to the receiving terminal 20 and ending with the receiving terminal 20 displaying the moving image data (steps S2 through 4) is the same as the example shown in FIG. 7.

However, in the example shown in FIG. 8, the control unit of the transmitting terminal 10 determines whether or not the specific trigger condition is met while transmitting the moving image data (step S2-5). Note that if no specific trigger is detected, it returns to step S2-1 and continues transmitting the moving image data. If the specific trigger condition is determined to be met, the RAW image acquired with the image sensor is encoded for still images (step S2-6).

There are no limitations on the trigger condition, and a condition appropriate for generating the high-quality still image data may be set. For example, the transmitting terminal 10 includes a variety of sensors such as a gesture sensor, an acceleration sensor, a gyro sensor, a geomagnetic sensor, and a biometric sensor as described above. The detection of a specific signal with these sensors may be used to determine that the trigger condition has been met. For example, the detection of a specific action of the worker who wears the transmitting terminal 10 with the acceleration sensor and the gyro sensor may be used to determine that the trigger condition has been met. Examples of specific actions of the worker include the worker bending forward to check the hand, the worker looking at the same position for a specific period of time (for example, five to ten seconds), the worker looking upward or the worker unexpectedly falling down.

Alternatively, for example, the detection of a specific image included in the moving image data as a result of the analysis of the moving image data by the control unit may be used to determine that the trigger condition has been met. For example, the detection of a specific two-dimensional code or three-dimensional code (QR code (registered trademark)) included in the moving image data may be used as a trigger to activate the still image encoder to obtain the still image data. This makes it possible to accurately read three-dimensional codes and other codes using the high-quality still image data.

The transmitting terminal 10 saves the still image data described above at least temporarily in the memory (step S2-7). Then, the transmitting terminal 10 sends a notification that it has saved the still image data to the receiving terminal 20 (step S2-8). Upon receiving this notification, the receiving terminal 20 displays the notification on the display or the like and asks the user (support personnel) if he/she wishes to obtain the still image data (step S2-9). If there is no request for the still image data, the receiving terminal 20 continues displaying the moving image data that is being transmitted from the transmitting terminal 10 as usual until the transmitting terminal 10 stops the acquisition of the image. Conversely, if there is a request for the still image data, the receiving terminal 20 sends request information for the still image data to the transmitting terminal 10 (step S2-10).

Upon receiving the request information for the still image data from the receiving terminal 20, the transmitting terminal 10 reads the still image data corresponding to the request from the memory (step S2-11) and sends it back to the receiving terminal 20 (step S2-12). Upon receiving the still image data from the transmitting terminal 10, the receiving terminal 20 displays them on the display (step S2-13). This process of transmitting the moving image data in real time and the process of transmitting the still image data sequentially when requested are performed until the transmitting terminal 10 stops the acquisition of the image. Upon stopping the acquisition of the image, in other words, when the image sensor is turned off, the transmitting terminal 10 uploads the still image data saved in the memory to the cloud server 30 (steps S2-14 and S2-15). This makes it possible for the receiving terminal 20 to download the still image data from the cloud server 30 even when the transmitting terminal 10 deletes the still image data from the memory.

Note that the specific examples shown in FIG. 7 and FIG. 8 are not two alternative methods, and both methods may be employed as a process for transmitting the moving image data and the still image data from the transmitting terminal 10 to the receiving terminal 20. In other words, the transmitting terminal 10 may generate the still image data at regular intervals in accordance with the specific example in FIG. 7 and may also generate the still image data when the specific trigger condition is met in accordance with the specific example in FIG. 8. Alternatively, either of the specific examples shown in FIG. 7 and FIG. 8 may naturally be employed.

The description of the present application has described the embodiment of the present invention with reference to the drawings to represent the contents of the present invention. Note, however, that the present invention is not limited to the embodiment described above but includes modified or improved embodiments that are obvious to those skilled in the art based on the matters described in the description of the present application.

### REFERENCE SIGNS LIST

- 10: transmitting terminal
- 11: control unit
- 11a: buffer memory
- 11b: image processing engine for moving images
- 11c: moving image encoder
- 11d: image processing engine for still images
- 11e: still image encoder
- 11f: memory
- 12: memory unit
- 13: communication unit
- 14: sound-collecting unit
- 15: imaging unit
- 16: gesture sensor
- 17: sensors
- 18: sound-emitting unit
- 19: position information acquiring unit
- 20: receiving terminal
- 21: control unit
- 22: memory unit
- 23: communication unit
- 24: display unit
- 25: operation unit
- 26: sound-collecting unit
- 27: sound-emitting unit
- 30: cloud server
- 31: server device
- 100: system

## Claims

1. An information processing terminal comprising:
an image sensor that generates an image signal;
a moving image encoder that converts the image signal into moving image data by encoding for moving images;
a memory; and
a still image encoder that converts the image signal into still image data by encoding for still images, associates the still image data with the moving image data, and saves the still image data in the memory.

2. The information processing terminal according to claim 1, wherein
the still image encoder adds synchronization data for associating the still image data with the moving image data in a time-sequential manner and saves the still image data in the memory.

3. The information processing terminal according to claim 1, comprising:
a communication unit that can communicate with a receiving terminal via a communication line; and
a control unit that, when a still image request signal including a designation of a specific timing in the moving image data is received from the receiving terminal while transmitting the moving image data to the receiving terminal, executes processes of reading still image data corresponding to the timing from the memory and transmitting the still image data to the receiving terminal.

4. The information processing terminal according to claim 3, wherein
the communication unit is further capable of communicating with a server device, and
the control unit further executes a process of uploading the still image data that are saved in the memory to the server device together with the moving image data after the transmission of the moving image data to the receiving terminal has been completed.

5. The information processing terminal according to claim 1, comprising
a control unit that analyzes the moving image data, drives the still image encoder when a specific image is detected to be included in the moving image data, and controls the still image encoder to convert the image signal into still image data and save the still image data in the memory.

6. The information processing device according to claim 1, comprising:
one or more sensors of a gesture sensor, an acceleration sensor, a gyro sensor, a geomagnetic sensor, and a biometric sensor; and
a control unit that drives the still image encoder when the sensor detects a specific signal, and controls the still image encoder to convert the image signal into still image data and save the still image data in the memory.

7. The information processing device according to claim 1, wherein
the information processing terminal is a wearable device to be worn by a worker in the field.

8. The information processing device according to claim 7, wherein
the image signal is a signal of an image of a field operation captured by the worker.

9. An image transmission system comprising:
the information processing device according to claim 3; and
the receiving terminal that is capable of receiving the moving image data and the still image data from the information processing device.

10. A program for causing a portable information terminal to function as the information processing terminal according to claim 1.
